# EUROPÄISCHE PATENTSCHRIFT

(11) **EP 1 629 967 B1**
(45) Veröffentlichungstag und Bekanntmachung des Hinweises auf die Patenterteilung: **09.04.2008**
(21) Anmeldenummer: 05002501.4
(22) Anmeldetag: 07.02.2005
(51) Int. Cl.: B32B 3/06, B32B 27/32, B65D 51/20

(54) **Siegelbare Verbundfolie und deren Verwendung zur Herstellung eines Schlauchbeutels**
Resealable tubular container of multi-layer film
Emallage-sachet refermable de film compose

(30) Priorität: 28.06.2004 DE 102004031203
(43) Veröffentlichungstag der Anmeldung: 01.03.2006
(73) Patentinhaber: Wipak Walsrode GmbH & Co. KG, 29699 Bornlitz (DE)
(72) Erfinder: Nelke, Dorit, 21698 Bargstedt (DE); Jacobsen, Sven, 29683 Bad Fallingbostel (DE)
(74) Vertreter: Läufer, Martina

(56) Entgegenhaltungen:
- EP-A- 0 215 400
- WO-A-00/02782
- DE-U1- 8 123 305
- DE-U1- 8 212 844

## Beschreibung

Die Erfindung betrifft eine siegelbare Verbundfolie für die Herstellung eines Folienbeutels, die beidseitig außenliegend jeweils eine Siegelschicht aufweist, die Verwendung dieser Folie zur Herstellung wieder verschließbarer Schlauchbeutel mit Verschlusslasche sowie auf zugehörige Schlauchbeutel selbst.

Die Erfindung bezieht sich allgemein auf das Gebiet der Folienverpackungen, die vor allem für eine geschlossene und sichere Verpackung verschiedenster Produkte im Einsatz sind. Im Allgemeinen wird das verpackte Produkt oder das Füllgut von der Folie vollständig umschlossen, z.B. umwickelt oder in einem Schlauchbeutel eingeschlossen. Da die Folien es heute erlauben, Produkte licht- und luftdicht zu verpacken, und sogar einen gezielten Gasaustausch oder auch weitgehenden Sauerstoffausschluss ermöglichen, werden in großem Umfang empfindliche Produkte und Lebensmittel mit diesen Folien eingeschlossen.

Ein Beispiel für einen gattungsgemäßen Schlauchbeutel mit Verschlusslasche findet sich in der WO 94/25356. Der dort beschriebene Beutel kann als Schlauchbeutel aus einer beidseitig siegelbaren Folienbahn hergestellt werden, indem eine Längsnaht unter Überlappung der Folienbahnkanten gebildet wird, wobei die Folienunterseite, d.h. die spätere Beutelinnenseite, entlang der außenliegenden Folienkante mit der Folienoberseite, d.h. der späteren Beutelaußenseite, der darunterliegenden Folienkante versiegelt wird. Quer zum Schlauch und zur Verarbeitungsrichtung wird der Beutel jeweils mit zwei Quernähten abgeschlossen. Durch die Überlappung der Folienbahnkanten entsteht im Überlappungsbereich eine Verschlusslasche, die geöffnet werden kann, indem die Siegelnähte, die im Bereich der außen/innen-Siegelung leicht zu lösen sind, aufgezogen werden. Ein solches leichtes Öffnen einer Siegelnaht wird auch als "peeling" bezeichnet.

Der in der WO 94/25356 beschriebene Beutel aus peelfähiger Verbundfolie ist nur durch einen gesonderten Klebestreifen wieder zu verschließen, der i.a. die Lasche von oben übergreifend punktuell mit dem Beutel verbindet. Ein solcher Verschluss ist nicht dicht.

Gerade im Lebensmittelbereich besteht jedoch ein großer Bedarf an vollständig wiederverschließbaren Verpackungen, damit der Inhalt einer Packung nicht in einem Schritt aufgebraucht werden muss und der nicht entnommene Teil des Produkts geschützt wird und sachgerecht aufbewahrt werden kann.

Zur Realisierung der Wiederverschließbarkeit wurden im Stand der Technik bislang verschiedene Möglichkeiten vorgeschlagen. Aus der DE 295 07 064 ist beispielsweise ein gesonderter Beutelverschluss in Klammerform bekannt, mit dem geöffnete oder offene Beutel jeder Art wieder verschlossen werden können, indem die Beutelwände unter Druck zwischen den Backen einer Klammer eingeschlossen werden. Diese gesonderten Verschlüsse haben den Nachteil, dass der Benutzer sie vorrätig halten muss, so dass sie in einer Situation, in der ein Beutel verschlossen werden soll, häufig nicht parat sind.

Die DE 199 05 197 beschreibt einen Rollverschluss an einem Beutel, bei welchem die Wiederverschließbarkeit mit Hilfe von Klebestellen an einer Verschlusslasche und mit einem vorgesehenen Knickschema bewerkstelligt wird. Die Fertigung eines solchen Beutels ist fertigungstechnisch relativ kompliziert.

Die WO 93/08982 beschreibt einen Folienbeutel und dessen Herstellung aus einer einseitig siegelbaren Folie, bei dem ein klebendes, druckempfindliches Material an bestimmten Stellen der Folie in einem Muster aufgetragen und durch ein nicht druckempfindliches Material abgedeckt wird. Die Klebestellen sind an solchen Positionen auf dem Rollenmaterial vorgesehen, die später an den Beutelverschlusslaschen außerhalb der Siegelnähte zu liegen kommen, um den Beutel an diesen Stellen wieder verschließbar zu machen. Die Herstellung dieses Beutels erfordert ein spezielles Herstellungsverfahren und eine spezielle Verarbeitungsmaschine, mit der das gewünschte Klebstoffmuster erzeugt werden kann. Durch den punktförmigen Auftrag kann der Beutel nicht wieder dicht verschlossen werden.

Aus der US 5 089 320 ist weiterhin ein Verpackungsmaterial mit einseitiger Siegelschicht bekannt, das durch Verwendung einer Haftklebstoffschicht unter der Siegelschicht zur Herstellung wiederverschließbarer Verpackungen geeignet ist. Verpackungsformen werden nicht beschrieben.

Die Aufgabe der Erfindung besteht demgegenüber darin, einen gesiegelten Folienbeutel mit Verschlusslasche und eine für dessen Herstellung geeignete Folie zur Verfügung zu stellen, der die Nachteile im Stand der Technik nicht zeigt, vollständig wieder verschließbar ist und auf gängigen Verarbeitungsmaschinen hergestellt werden kann.

Ein besonderes Problem beim Wiederverschließbarmachen des gattungsgemäßen Beutels, wie in WO 94/25356 gezeigt, besteht darin, dass diese Beutelform nur mit Hilfe beidseitig siegelbarer Folien hergestellt werden kann und dass die Siegelnähte in bestimmten Bereichen des Beutels fest verschlossen bleiben müssen, während sie nur an der Verschlusslasche aufreißbar und wieder verschließbar sein sollen.

Überraschenderweise kann dieses Problem durch die Kombination eines bestimmten Schichtaufbaus der Folie mit der speziellen Beutelfaltung gelöst werden.

Zur Lösung der Aufgabe ist gemäß dieser Erfindung vorgesehen, dass die gattungsgemäße Verbundfolie, die beidseitig außenliegend jeweils eine Siegelschicht aufweist, einseitig unmittelbar unter einer außenliegenden, ersten Siegelschicht (10) wenigstens streifenförmig entlang einer Kante der Folienbahn eine Haftklebstoffschicht (12) sowie in der Schichtfolge darunterliegend eine Trägerschicht (14) aufweist und dass die Zusammensetzung der Schichten so gewählt ist, dass die Reißfestigkeit zweier miteinander versiegelter Siegelschichten (10) größer ist als die Bindung der Haftklebstoffschicht (12) zu den an sie unmittelbar angrenzenden Schichten oder innerhalb der Haftklebstoffschicht selbst.

Unter einem Haftklebstoff wird hier ein druckempfindlicher, permanent klebender Klebstoff verstanden, der eine beidseitig haftende, jedoch zumindest einseitig wieder lösbare Verbindung zwischen zwei Substraten ermöglicht Solche Haftklebstoffe sind im Stand der Technik für verschiedenste Anwendungen, auch im Verpackungsbereich, bekannt.

Die Zusammensetzung der Schichten und die Schichtfolge ist so gewählt, dass die Reißfestigkeit zweier miteinander versiegelter Siegelschichten und ggf. die Verbundfestigkeit von der äußersten Siegelschicht bis zur Haftklebstoffschicht, wenn hier (beispielsweise innerhalb der Siegelschicht) mehrere Schichten vorhanden sind, größer ist als die Bindung oder Verbundfestigkeit der Haftklebstoffschicht zu den an sie unmittelbar angrenzenden Schichten oder innerhalb der Haftklebstoffschicht selbst.

Vorzugsweise ist bei der erfindungsgemäßen Folie die Haftklebstoffschicht innerhalb der Verbundfolie vollflächig ausgebildet und weiter vorzugsweise unmittelbar unter der ersten Siegelschicht angeordnet.

Unter der ersten Siegelschicht wird hier die eine der beidseitig an der Verbundfolie vorhandenen Siegelschichten verstanden, und zwar diejenige, die bei aus dieser Folie hergestellten Schlauchbeuteln im wesentlichen - abgesehen von gegebenenfalls gebildeten Einschlägen und Umschlägen - an der Beutelaußenseite zu liegen kommt (a).

Die demgegenüber andere oder zweite Siegelschicht (b) liegt an einem aus der Folie hergestellten Schlauchbeutel innen. Die permanenten, nicht aufreißbaren Schlauchbeutelquemähte sind generell b/b-gesiegelt.

Als äußerste Siegelschicht ist demgegenüber die gesamte außenliegende Siegelschicht über ihre ganze Dicke oder ein gegenüber der Dicke der Schicht in Querschnittsrichtung äußerster, tatsächlich siegelnder Bereich dieser Schicht anzusehen.

Als Siegelschichten können grundsätzlich alle im Stand der Technik für die Herstellung von Siegelnähten im Heißsiegelverfahren bekannten Materialien verwendet werden. Bevorzugt bestehen die Siegelschichten der erfindungsgemäßen Verbundfolie aus olefinischen Homo- oder Copolymeren, weiter vorzugsweise aus LDPE (low density polyethylene), HDPE (high density polyethylene), LLDPE, m-PE, Ethylen/Vinylacetat-Copolymer, weiter bevorzugt aus Polypropylen-Homo- oder Copolymeren sowie Polyester-Homo- oder Copolymeren, oder aus Mischungen mit oder aus diesen Polymeren.

Die Eigenschaften von Siegelschicht und darunterliegender Haftklebstoffschicht sollten aufeinander abgestimmt werden, was der Fachmann jedoch durch experimentelle Optimierung im jeweiligen Einzelfall ohne weiteres vornehmen kann.

Für die Haftklebstoffschicht stehen die ebenfalls als solche bekannten Klebematerialien, insbesondere die druckempfindlichen Permanentklebstoffe, wie Hotmelts, z.B. auf Basis von Styrol/Butadien-Blockcopolymeren oder Styroi/Isopren/Butadien-Blockcopolymeren oder wie UV-vernetzende Warmmelts oder wie Haftklebstoffe auf Basis von Dispersionen (z.B. Acrylharzen oder Natur- oder Synthesekautschuk) zur Verfügung, wobei derzeit für Dispersionshaftklebestoffe Acrylsäure- und/oder Methacrylsäure-Copolymerisate, insbesondere Acrylsäure- und/oder Methacrylsäure-Styrol-Copolymerisate bevorzugt sind.

Die Dicke der Haftklebstoffschicht beträgt vorzugsweise 5 µm bis 30 µm weiter vorzugsweise 10 µm bis 20 µm, bei einer Dicke der Siegelschichten zwischen 10 µm und 50 µm, vorzugsweise 20 µm bis 30 µm. Die Siegelschichten sind vorteilhafterweise wenigstens ebenso dick wie die Haftklebstoffschichten bis zu doppelt so dick.

Weiterhin ist es vorteilhaft, wenn im Schichtaufbau der Verbundfolie eine Migrationsbarriereschicht vorgesehen ist. Eine solche Migrationsbarriereschicht vermindert oder verhindert die Wanderung niedermolekularer Bestandteile insbesondere quer zur Verbundfolie in in Wanderungsrichtung hinter der Migrationsbarriere gelegene Schichten. Bei Folien, die im Lebensmittelbereich eingesetzt werden, wird i. a. verlangt, dass keine niedermolekularen Bestandteile aus der Hotmeltschicht in das verpackte Lebensmittel migrieren können. Andererseits sollen auch aus dem Verpackungsinhalt keine niedermolekularen Stoffe, z.B. Alkohole, durch die Verbundfolie wandern und dort Eigenschaften der Verbundfolieschichten, beispielsweise die Klebefähigkeit der Haftklebstoffschicht, ungünstig beeinflussen.

Grundsätzlich sind als Migrationsbarriereschichten solche Schichten geeignet, die intermolekulare Wechselwirkungen mit den migrierenden Stoffen eingehen und diese so am Migrieren durch die Folie hindern. In bevorzugter Ausführungsform werden Schichten verwendet, die EVOH (Ethylen/Vinylalkohol-Copolymerisat) enthalten, vorzugsweise wenigstens 75 Gew.-%, oder aus EVOH bestehen. Die EVOH-Schicht kann von Polyolefinen (Homo- und/oder Copolymeren) eingeschlossen sein, bevorzugt von PE-Schichten und besitzt im Allgemeinen selbst eine Schichtdicke zwischen 0,5 und 7 µm, vorzugsweise ≤ 2 µm, weiter vorzugsweise 0,7 bis 1,5 µm.

Von der mit Haftklebstoff unterlegten Siegelschicht ausgehend liegt die Migrationsbarriereschicht vorzugsweise darunter, d.h. der prinzipielle Schichtaufbau ist: Siegelschicht/Haftklebstoffschicht - Migrationsbarriereschicht - Siegelschicht. Oberhalb und/oder unterhalb der Migrationsbarriereschicht können weitere Schichten vorhanden sein. Die Trägerschicht kann ebenfalls oberhalb oder unterhalb der Migrationsbarriereschicht liegen. Es ist vorteilhaft, wenn die nicht über der Haftklebstoffschicht liegende (untere) Siegelschicht unmittelbar mit der Trägerschicht oder einer direkt auf der Trägerschicht aufliegenden Migrationsbarriereschicht verbunden ist.

Alternativ kann auch eine der Siegelschichten mit einer Migrationsbarriereschicht modifiziert sein, man spricht dann von einer "Barriere-Siegelschicht". Hierfür kann eine im Allgemeinen möglichst dünne Migrationsbarriereschicht, wie z.B. eine EVOH-Schicht, in einer Siegelschicht coextrudiert oder unter einer Siegelschicht (von der äußeren Siegelseite abgewandt) coextrudiert oder aufkaschiert sein.

Generell kann jede Siegelschicht mit Zusätzen zu den Basispolymeren und/oder bis zu maximal 8 µm dicken Zwischenschichten modifiziert sein, vorzugsweise mit einer coextrudierten Migrationsbarriereschicht von weiter vorzugsweise bis zu 1,5 µm Dicke.

Geeignete Materialien für die Trägerschicht sind alle Folienmaterialien, die der Verbundfolie insgesamt die gewünschten mechanischen und physikalischen Eigenschaften verleiht. Bevorzugt kann die Trägerschicht aus Homo- oder Copolymeren von Polyester, bevorzugt Polyethylenterephthalat (PET), Polyolefin, insbesondere Polyethylen (PE) oder Polypropylen (PP), Polyamid (PA) bestehen, besonders bevorzugt sind mono- oder biaxial orientierte Folien oder mehrschichtige Verbunde.

In bevorzugter Ausführungsform sind alle Schichten der Folie vollflächig ausgebildet, insbesondere vollflächig coextrudiert und/oder kaschiert. Unter Einhaltung der grundsätzlichen Schichtfolge von erster (oder äußerer) ggf. modifizierter Siegelschicht, Haftklebstoffschicht, Trägerschicht, gegebenenfalls Migrationsbarriereschicht und zweiter Siegelschicht können zwei oder mehr Einzelfolien oder coextrudierte Mehrfachfolien durch Kaschierung verbunden sein.

Coextrudierte Schichten werden bevorzugt im Blasverfahren hergestellt, jedoch ist auch die Extrusion durch Breitschlitzdüsen möglich.

Die Gesamtdicke der Folie beträgt vorzugsweise 20 bis 200 µm, weiter vorzugsweise 50 bis 120 µm.

Die Erfindung umfasst auch die Verwendung der beschriebenen Verbundfolie zur Herstellung eines mit Siegelnähten gebildeten Schlauchbeutels.

Mit Hilfe der oben beschriebenen Verbundfolie ist es nämlich möglich, einen Schlauchbeutel zu falten und so zu siegeln, dass er einerseits entlang der Quernähte (wobei sich die Bezeichnung Quernähte auf die Verarbeitungsrichtung während der Beutelherstellung bezieht, bezogen auf den Beutel könnte man diese Nähte auch als Seitennähte bezeichnen) im Bereich einer b/b-Siegelung auch unter gewissem Zug sicher verschlossen bleibt, während sich die Verschlusslasche im Bereich der Außen/Innen-Siegelung (auch als a/b-Siegelung bezeichnet) öffnen lässt. Ebenso ist ein leichteres Öffnen und Freilegen der Haftklebstoffschicht im Bereich einer a/a-Siegelung möglich, wenn beispielsweise eine der Folienbahnkanten zusätzlich nach Innen umgeschlagen wird.

Beim Öffnen der Verschlusslasche werden die verschweißten Siegelschichten gemeinsam von der darunter liegenden - oder bei ala-Siegelung einer der darungerliegenden - Haftklebstoffschicht abgelöst, da die miteinander versiegelten Siegelschichten, die hier keine peelfähigen Siegelschichten sind, untereinander eine größere Bindung haben als die Haftung zwischen Haftklebstoff und angrenzenden Schichten oder innerhalb des Haftklebstoffs. Dabei ist es für die erfindungsgemäß gewünschte Wirkung, die Haftklebstoffschicht freizulegen, unerheblich, von welcher der angrenzenden Schichten sich der Haftklebstoff löst, oder ob er teilweise auf beiden der voneinander abgehobenen Folien verbleibt (Kohäsionsbruch). In jedem Fall wird die Haftklebstoffschicht freigelegt, und es wird möglich, den Beutel durch Andrücken der Lasche wieder zu verschließen.

Für die Erfindung ist es in erster Linie erforderlich, dass die Eigenschaften der Haftklebstoffschicht und der darüberliegenden Siegelschicht aufeinander abgestimmt sind. Die Haft- und Klebeeigenschaften der Haftklebstoffschicht sollen so sein, dass diese sich mehrfach reversibel mit dem Material der Siegelschicht haftend verbinden und dennoch unter Zug von Hand wieder lösen lässt.

Bei der Herstellung des erfindungsgemäßen Schlauchbeutels wird daher oberhalb der Haftklebstoffschicht gesiegelt, ohne die Haftklebstoffschicht zu schädigen. Die Haftklebstoffschicht wird nicht mit eingesiegelt, obwohl sie sich unmittelbar unter einer der Siegelschichten, die gegebenenfalls mit zusätzlichen oder Zwischenschichten modifiziert sein kann, befindet. Dies liegt daran, dass die Haftklebstoffschicht eine Erwärmung auf oberhalb der Erweichungstemperatur der Siegelschichten verträgt, ohne dass die Haftklebstoffeigenschaften beeinträchtigt würden und bei ausreichender Viskosität dem Siegeldruck standhält, ohne verdrängt zu werden.

Demgemäß wird die Aufgabe der Erfindung weiterhin durch einen Schlauchbeutel mit zwei gesiegelten Quer- oder Seitennähten und einer gesiegelten Längsnaht entlang oder parallel zur Kante der Verschlusslasche gelöst, der aus der erfindungsgemäßen Verbundfolie hergestellt wird, indem die Längsnaht unter Überlappung der Folienbahnkanten gebildet und die Folienunterseite, die bezogen auf den hergestellten Beutel der Beutelinnenseite entspricht, längs der außenliegenden Folienkante mit der Folienoberseite/Beutelaußenseite der darunterliegenden Folienkante versiegelt wird, sodass die Haftklebstoffschicht unmittelbar unter der an der Beutelaußenseite liegenden Siegelschicht liegt.

Alternativ wird die Aufgabe durch einen demgegenüber abgewandelten Schlauchbeutel aus der erfindungsgemäßen Verbundfolie gelöst, der zwei gesiegelte Quernähte und eine gesiegelte Längsnaht besitzt und bei dem die Längsnaht unter a/a-Versiegelung zweier nach innen umgeschlagener Folienbahnkanten gebildet wird. Bei diesem Ausführungsbeispiel entsteht beidseitig um die Längsversiegelung eine Haftklebstoffschicht, bzw. ein Haftklebstoffstreifen.

Schließlich umfasst die Erfindung einen Schlauchbeutel, bei dem die Längsnaht unter a/a-Versiegelung der nach innen umgeschlagenen außenliegenden Folienbahnkante mit der Folienoberseite/Beutelaußenseite der darunterliegenden unter Bildung der Tasche weiter eingeschlagenen Folienkante gebildet wird.

Vorzugsweise ist wenigstens eine der Folienkanten oder wenigstens ein damit gebildeter Umschlag an oder nahe seitlicher Quernahtenden gelegen. Dies bedeutet, dass durch eine erste Längsfaltung der Folienbahn, bei der die Folienunterseiten beziehungsweise die späteren Beutelinnenseiten aufeinander zu liegen kommen, eine Tasche für die spätere Aufnahme des Füllguts gebildet wird, wobei die einzelnen Beuteltaschen durch die spätere Siegelung der Quernähte seitlich abgeschlossen werden, und dass durch wenigstens eine zweite, entgegengesetzte Längsfaltung an der zuerst umgeschlagenen Folienkante oder einem damit gebildeten Umschlag eine Verschlusslasche gebildet wird. In einem Ausführungsbeispiel wird dabei die Folienunterseite des überstehenden, nicht die Tasche bildenden Folienbahnteils auf die Oberseite des zuerst eingeschlagenen Foliebahnteils gefaltet, wobei dieser obenauf gefaltete Teil nach Siegelung der Quernähte die Verschlusslaschen der Beutel bildet. Auch hier kann wiederum die Kante des obenauf gefalteten Folienbahnteils zusätzlich umgeschlagen sein. Bei einem zusätzlichen Umschlag der oben aufliegenden Folienbahnkante ergibt sich für die Längsnaht eine a/a-Siegelung anstelle einer a/b-Siegelung.

Die Längsnaht, die die Verschlusslasche am Beutel befestigt bzw. den Beutel mit einer Verschlusslasche verschließt, ist entlang der äußeren Folienkante oder bevorzugt parallel zur äußeren Folienkante oder zu einem Folienkantenumschlag in einem Abstand hiervon angeordnet, der kleiner ist als die Überlappungsbreite, so dass ein streifenförmiger, eine Aufreißhilfe bildender Überstand aus der Folienkante oder dem Umschlag jenseits der Längsnaht gebildet wird.

Alternativ oder zusätzlich kann auch eine Aufreißhilfe in Form eines Aufreißlappens an der über die Längsnaht hinausstehenden außenliegenden Folienkante oder einem freiliegenden Umschlag gebildet sein. Dieser Aufreißlappen kann beispielsweise bogen- oder halbkreisförmig über die Längsnaht hinausragen.

Im Folgenden wird die Erfindung anhand von Beispielen im Zusammenhang mit den Figuren der Zeichnung näher beschrieben. In der Zeichnung zeigen:
- Fig. 1:: schematische Darstellung einer ersten Beutelfaltung im Querschnitt mit Blickrichtung entlang der Längsnaht;
- Fig. 2:: Darstellung der Schichtfolge des Beutels aus Fig. 1 über den Beutelquerschnitt am Beispiel des mit gestrichelten Linien gekennzeichneten Ausschnitts aus Figur 1 (Fig. 2a: leerer Beutel; Fig. 2b: befüllter Beutel
- Fig. 3:: Draufsicht auf den Beutel aus Figur 1 und 2 von oben mit aufliegender Verschlusslasche;
- Fig. 4:: Draufsicht auf einen entsprechend gefalteten Beutel wie in Figuren 1 bis 3 mit zusätzlich angeformtem Aufreißlappen;
- Fig. 5:: schematische Darstellung eines weiteren Ausführungsbeispiels für eine Beutelfaltung, im Querschnitt gesehen;
- Fig. 6:: Darstellung der Schichtfolge des Beutels aus Fig. 5;
- Fig. 7:: schematische Darstellung eines weiteren Ausführungsbeispiels für eine Beutelfaltung mit zwei nach innen umgeschlagenen Folienbahnkanten im Querschnitt.

Die erfindungsgemäße Verbundfolie, die beidseitig außenliegend eine Siegelschicht und einseitig unmittelbar unter einer der Siegelschichten eine Haftklebstoffschicht aufweist, kann beispielsweise die folgenden Folienaufbauten (Schichtfolgen) besitzen:
Beispiel 1: PE/EVOH/PE/HK/PE
Beispiel 2: PE/PA/EVOH/PA/PE/HK/PE
Beispiel 3: PE/PET/PE/EVOH/PE/HK/PE
Beispiel 4: PE/EVOH/PE/PET/PE/HK/PE
Beispiel 5: PE/PET/PE/HK/PE
Beispiel 6: PE/PET-SiOₓ/PE/HK/PE
Beispiel 7: PE/PET/HK/PE
Beispiel 8: PE/PET/HK/ (PE/EVOH/PE)

Für alle Beispiele sind die Schichten in der Reihenfolge von der Folienunterseite, d.h. der späteren Beutelinnenseite, zur Folienoberseite, d.h. der späteren Beutelaußenseite aufgezählt. Der Folienaufbau ist daher grundsätzlich:
Siegelschicht/....(Trägerfolie) .../HK/Siegelschicht

Die Siegelschichten können modifiziert sein und wie in Beispiel 8 z.B. als Barriere-/Siegelschichten ausgebildet sein.

Es bedeuten im Einzelnen:
- PE -: Polyethylen, außenliegend = PE-Siegelschicht
- EVOH-: EthylenNinylalkohol-Copolymer (Träger- und/oder Barriereschicht)
- HK -: Haftklebstoff
- PA -: Polyamid (Trägerschicht)
- PET -: Polyester (Trägerschicht) Angrenzen von Schichten, diese können auch mittels Haftvermittler, Kaschierkleber oder Primer verbunden sein.

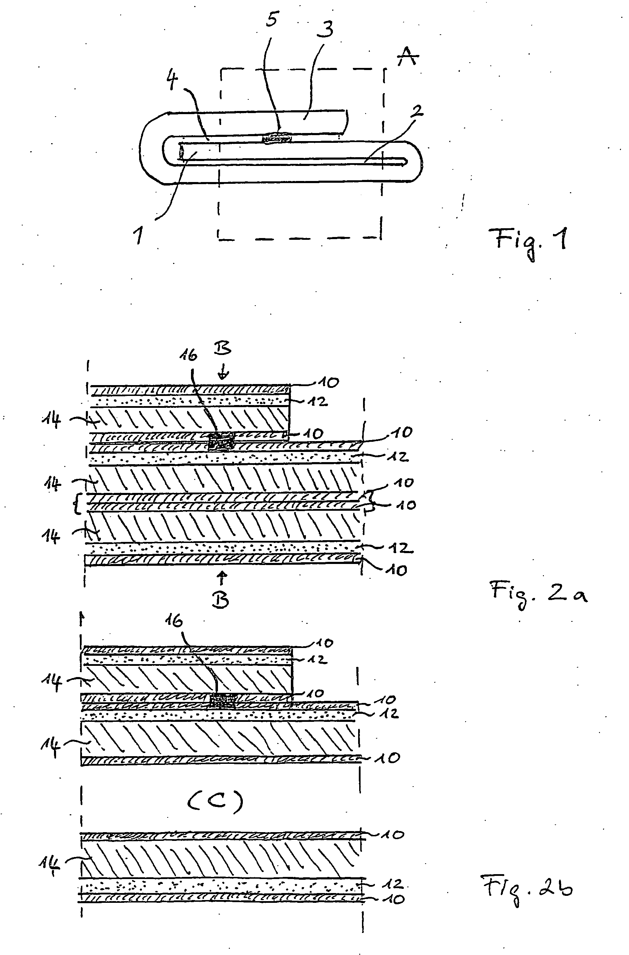

Figur 1 zeigt die prinzipielle Faltung eines Schlauchbeutels mit Verschlusslasche im Querschnitt, gesehen in Richtung der Längsnaht, mit der die Verschlusslasche fixiert wird.

Eine erste Folienbahnkante 1 wird so eingeschlagen, dass die Folienunterseiten, d.h. die späteren Beutelinnenseiten im Bereich 2 aufeinander zu liegen kommen. Hierdurch werden später, nach Siegelung der nicht dargestellten Quernähte, BeutelTaschen für die Aufnahme des Füllguts gebildet. Zwischen den Beutelinnenseiten findet an den Quernähten eine innen/innen- oder auch b/b-Siegelung statt (nicht dargestellt). Die b/b-Siegelung der erfindungsgemäßen Folie ist gegen Zug relativ stabil und bleibt beim sachgerechten Öffnen des Beutels erhalten, da die Siegelnähte von fest mit diesen verbundenen coextrudierten oder aufkaschierten Schichten umgeben sind. Eine zweite Folienbahnkante 3 liegt überlappend mit der Folienbahnkante 1 so auf dem Beutel auf, dass im Bereich des außen/innen-Kontakts 4 eine außen/innen- oder auch a/b-Siegelung sowohl seitlich an der Quernähten als auch entlang der Längsnaht 5 erfolgt. Die außen/innen-Siegelung im Bereich 4 kann von Hand relativ leicht gelöst werden, da dort unter den miteinander fest versiegelten äußeren Siegelschichten direkt eine weiche Haftklebstoffschicht unterliegt, die von zumindest einer angrenzenden Schicht reversibel gelöst und an diese haftend wieder angedrückt werden kann.

Die Figuren 2a und 2b zeigen den in Figur 1 mit "A" bezeichneten Ausschnitt im Detail mit dem Schichtaufbau. Dargestellt ist eine Verbundfolie gemäß Beispiel 7 oder eine vom Aufbau entsprechende Folie. Fig. 2a zeigt die Schichtfolge am leeren, gefalteten Beutel, Fig. 2b zeigt die Situation außerhalb der Quernähte nach Befüllen mit Füllgut C).

Mit 10 sind die beidseitig an der Verbundfolienaußenseite liegenden Siegelschichten bezeichnet. Unter jeweils einer der Siegelschichten liegt die Haftklebstoffschicht 12. Der Folienaufbau weist außerdem eine Trägerschicht 14 auf. "B" deutet die Position der Längsnaht an, durch die die Siegelschichten 10 an Position 16 in der Darstellung senkrecht zur Zeichnungsebene miteinander versiegelt werden. Bei 16 handelt es sich um eine a/b-Siegelung, unter der eine Haftklebstoffschicht 12 gelegen ist. Bei der nicht dargestellten b/b-Siegelung der Quernähte sind die Siegelschichten von Trägerschichten aus Polyester, nämlich aus Polyethylenterephthalat, umgeben.

Durch den prinzipiellen Aufbau .....Trägerschicht/Siegelschicht/Siegelschicht/Trägerschicht ... innerhalb der Siegelung ist die Siegelung der Quernähte fest genug, um dem Zug beim Aufreißen der Verschlusslasche standzuhalten. Dies gilt auch, wenn zwischen Trägerschicht und Siegelschicht noch eine Migrationsbarriereschicht, vorzugsweise aus EVOH, vorgesehen ist. Die Siegelschichten dürfen keine peelfähigen Siegelschichten sein.

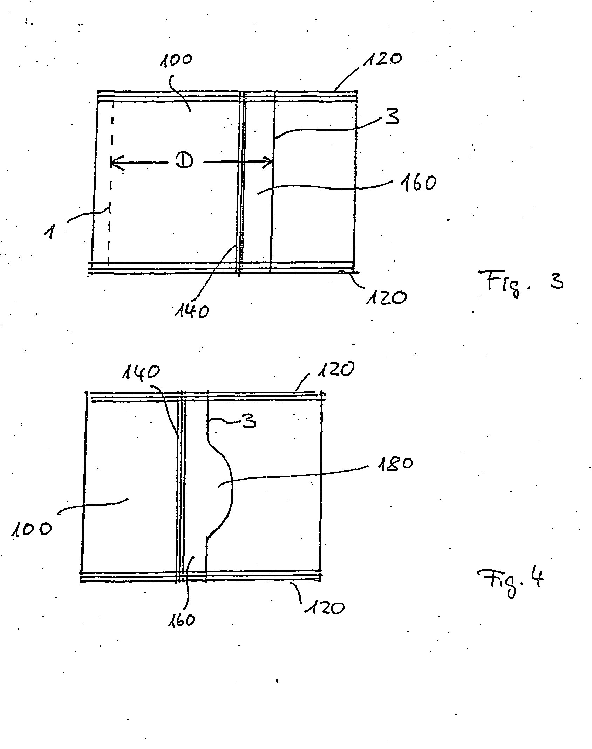

Figur 3 zeigt einen Folienschlauchbeutel, wie in Figuren 1 und 2 dargestellt, in der Draufsicht, wobei die Verschlusslasche oben liegt. Seitlich ist der Beutel mit Quernähten 120 verschlossen. Die Verschlusslasche 100 ist auf die Außenseite des Beutels umgeschlagen, so dass die beiden Folienbahnkanten 1 und 3 überlappend angeordnet sind und ein Überlappungsbereich der Überlappungsbreite D entsteht. Innerhalb dieses Überlappungsbereichs wird die Verschlusslasche 100 mit der Längsnaht 140 auf den Beutel aufgesiegelt und der Beutel somit insgesamt verschlossen. Bei der Herstellung der Verpackung auf an sich bekannten Verpackungsmaschinen wird im Allgemeinen zuerst die Längsnaht 140 gesiegelt, danach wird eine erste Quernaht 120 gesiegelt, das Füllgut in den gebildeten Schlauchbeutel eingefüllt, und abschließend wird der Beutel mit der zweiten Quernaht 120 verschlossen. Die Längsnaht 140 ist im Abstand zur Folienbahnkante 3 und im Wesentlichen parallel zu dieser angeordnet, so dass zwischen der Längsnaht 140 und der Folienbahnkante 3 ein Überstand 160 gebildet wird, der als Aufreißhilfe verwendbar ist. Von diesem Überstand 160 ausgehend kann die Siegelnaht im Bereich der a/b-Siegelung so aufgerissen werden, dass der darunterliegende Haftklebstoff freigelegt wird. Die Verschlusslasche 100 kann zum Öffnen des Beutels aufgeklappt und danach wieder zugeklappt und so der Beutel mit Hilfe des freigelegten Haftklebstoffs wieder verschlossen werden.

Figur 4 zeigt einen Folienschlauchbeutel wie in Figur 3, bei dem lediglich an dem Überstand 160 noch ein Aufreißlappen 180 angeformt wurde. Dies kann z.B. durch Ausstanzen vor der Siegelung (vor der Längssiegelung) erfolgen.

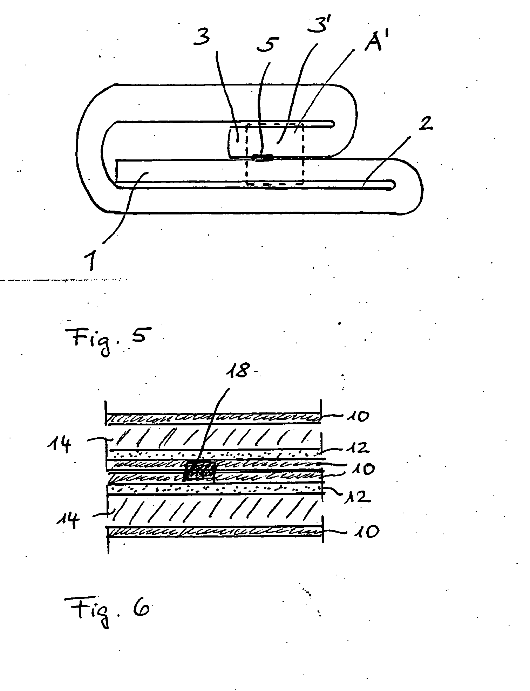

Figur 5 zeigt ein weiteres Ausführungsbeispiel eines Folienschlauchbeutels mit Verschlusslasche im Querschnitt, gesehen in Richtung der Längsnaht, mit der die Verschlusslasche fixiert wird.

Abweichend von dem in Figur 1 gezeigten Beispiel ist hier die Folienbahnkante 3 unter Bildung eines Umschlags (des Folienbahnkantenumschlags 3') ein weiteres Mal eingeschlagen. Durch diesen Umschlag wird im Gegensatz zu dem in Figur 1 gezeigten Beispiel eine a/a-Versiegelung gebildet.

Figur 6 zeigt die bei der a/a-Siegelung zustande kommende Schichtfolge anhand des in Figur 5 gezeigten Ausschnitts "A". Dadurch dass in dem gezeigten Ausführungsbeispiel beide Folienbahnkanten 1 und 3 eingeschlagen sind, kommen bei der Längsnahtversiegelung zwei äußere, nicht peelfähige Siegelschichten 10 aufeinander zu liegen und bilden eine Versiegelung an Position 18, die beidseitig von Haftklebstoffschichten 12 umgeben ist. Bei Anheben der Verschlusslasche des versiegelten Beutels an dem Umschlag 3' kann der Beutel aufgerissen werden, indem eine der Haftklebstoffschichten 12 freigelegt wird. Auch die a/a-Siegelung ermöglicht daher ein Aufreißen und Wiederverschließen des erfindungsgemäßen Folienbeutels entlang der Schlauchbeutellängsnaht 5 bzw. entlang der Verschlusslaschensiegelung.

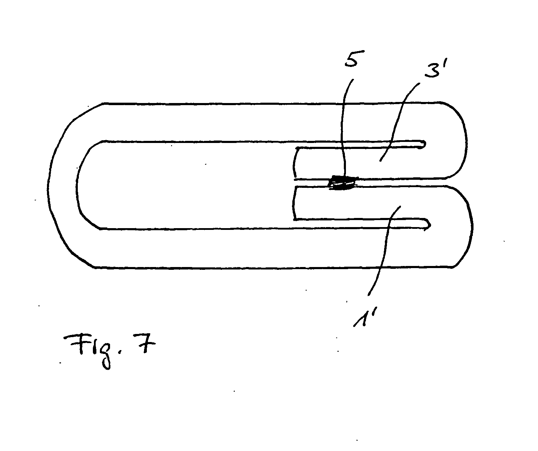

Figur 7 zeigt schließlich ein weiteres Ausführungsbeispiel für den Schlauchbeutel, bei dem beide Folienkanten gleichmäßig eingeschlagen sind und die Umschläge 1' und 3' bilden. Die Schichtfolge um die gesiegelte Längsnaht 5 ist die gleiche wie beim vorausgegangenen Beispiel, d.h. die gleiche wie in Figur 6 gezeigt. Der Beutel gemäß Figur 7 wird an seinem Rand an einem Ende der Quernähte geöffnet und besitzt keine an der Beutelmitte aufliegende und optische als solche zu erkennende Verschlusslasche. Dies ermöglicht z.B. einen ungestörteren Aufdruck auf der Beutelaußenseite, da die Möglichkeit zum Öffnen und Wiederverschließen sich ganz am Rande des Beutels befindet.

## Patentansprüche

1. Siegelbare Verbundfolie für die Herstellung von Folienbeuteln, die beidseitig außenliegend jeweils eine Siegelschicht (10) aufweist,
**dadurch gekennzeichnet, dass** die Folie einseitig unmittelbar unter einer außenliegenden, ersten Siegelschicht (10) wenigstens streifenförmig entlang einer Kante der Folienbahn eine Haftklebstoffschicht (12) sowie in der Schichtfolge darunterliegend eine Trägerschicht (14) aufweist und dass die Zusammensetzung der Schichten so gewählt ist, dass die Reißfestigkeit zweier miteinander versiegelter Siegelschichten (10) größer ist als die Bindung der Haftklebstoffschicht (12) zu den an sie unmittelbar angrenzenden Schichten oder innerhalb der Haftklebstoffschicht selbst.

2. Siegelbare Verbundfolie nach Anspruch 1, **dadurch gekennzeichnet, dass** die Haftklebstoffschicht (12) innerhalb der Verbundfolie vollflächig ausgebildet ist.

3. Siegelbare Verbundfolie nach Anspruch 1 oder 2, **dadurch gekennzeichnet, dass** die Siegelschichten (10) aus olefinischen Homo- oder Copolymeren bestehen, vorzugsweise aus LDPE, HDPE, LLDPE, m-PE, EthylenNinylacetat-Copolymer, Polypropylen-Homo- oder Copolymeren, Polyester-Homo- oder Copolymeren oder Mischungen mit oder aus den genannten Polymeren.

4. Siegelbare Verbundfolie nach einem der Ansprüche 1 bis 3, **dadurch gekennzeichnet, dass** die Haftklebstoffschicht (12) aus einem druckempfindlichen Permanentklebstoff besteht und vorzugsweise ein Hotmelt, insbesondere auf Basis von Styrol-Butadien-Blockcopolymeren oder Styrol/Isopren/Butadien-Blockcopolymeren, oder ein Warmmelt oder einen Dispersionsklebstoff enthält.

5. Siegelbare Verbundfolie nach einem der Ansprüche 1 bis 4, **dadurch gekennzeichnet, dass** die Siegelschicht mit Zusätzen zu den Basispolymeren und/oder bis zu maximal 8 µm dicken Zwischenschichten modifiziert ist, vorzugsweise mit einer koextrudierten, innenliegenden Migrationsbarriereschicht.

6. Siegelbare Verbundfolie nach Anspruch 5, **dadurch gekennzeichnet, dass** die Migrationsbarriereschicht von Polyolefinen, vorzugsweise von Polypropylen- oder Polyethylenschichten, insbesondere LDPE-HDPE, LLDPE- oder m-PE-Schichten, umgeben ist.

7. Siegelbare Verbundfolie nach einem der Ansprüche 1 bis 6, **dadurch gekennzeichnet, dass** eine Migrationsbarriereschicht vorhanden ist, die wenigstens 75 Ges.-% EthylenNinyialkohol-Copolymerisat enthält, vorzugsweise von der mit Haftklebstoff unterlegten Siegelschicht (10) ausgehend in der Schichtfolge unterhalb der Haftklebstoffschicht (12).

8. Siegelbare Verbundfolie nach Anspruch 6 oder 7, **dadurch gekennzeichnet, dass** die Dicke der Migrationsbarriereschicht zwischen 0,5 und 7 µm beträgt.

9. Siegelbare Verbundfolie nach einem der Ansprüche 1 bis 8, **dadurch gekennzeichnet, dass** die Dicke der Haftklebstoffschicht (12) 5 µm bis 30 µm beträgt, vorzugsweise 10 µm bis 20 µm, bei einer Dicke der Siegelschichten (10) zwischen 10 µm und 50 µm, vorzugsweise 20 µm bis 30 µm.

10. Siegelbare Verbundfolie nach einem der Ansprüche 1 bis 9, **dadurch gekennzeichnet, dass** die Gesamtdicke der Folie 20 bis 200 µm, vorzugsweise 50 bis 120 µm beträgt.

11. Siegelbare Verbundfolie nach einem der Ansprüche 1 bis 10, **dadurch gekennzeichnet, dass** die Trägerschicht (14) aus Homo- oder Copolymerisaten von Polyester, vorzugsweise Polyethylenterephthalat, Polyolefin, insbesondere Polyethylen, Polypropylen oder Polyamid besteht, weiter vorzugsweise mono- oder biaxial orientiert, oder mehrschichtigen Verbunden hieraus.

12. Schlauchbeutel aus einer Verbundfolie nach einem der Ansprüche 1 bis 11 mit zwei gesiegelten Quernähten (120) und einer gesiegelten Längsnaht (140), bei dem die Längsnaht (140) unter Überlappung der Folienbahnkanten (1;3) gebildet und die Folienunterseite/Beutelinnenseite längs der außenliegenden Folienkante (3) mit der Folienoberseite/Beutelaußenseite der darunterliegenden Folienkante (1) versiegelt wird, so dass die Haftklebstoffschicht (12) unter der an der Beutelaußenseite liegenden Siegelschicht (10) liegt.

13. Schlauchbeutel aus einer Verbundfolie nach einem der Ansprüche 1 bis 11 mit zwei gesiegelten Quernähten (120) und einer gesiegelten Längsnaht (140), bei dem die Längsnaht (140) unter ala-Versiegelung zweier nach innen umgeschlagener Folienbahnkanten (1;3) oder unter a/a-Versiegelung der nach innen umgeschlagenen außenliegenden Folienbahnkante (3) mit der Folienoberseite/Beutelaußenseite der darunterliegenden Folienkante (1) gebildet wird.

14. Schlauchbeutel nach Anspruch 12 oder 13, **dadurch gekennzeichnet, dass** wenigstens eine der Folienkanten (1;3) oder ein damit gebildeter Umschlagrand an oder nahe seitlicher Quernahtenden gelegen ist.

15. Schlauchbeutel nach einem der Ansprüche 12 bis 14, **dadurch gekennzeichnet, dass** die Längsnaht (140) parallel zu einer Folienkante (1;3) oder einem Folienkantenumschlag in einem Abstand hiervon angeordnet ist, der kleiner ist als die Überlappungsbreite, so dass ein streifenförmiger, eine Aufreißhilfe bildender Überstand (160) jenseits der Längsnaht gebildet wird.

16. Schlauchbeutel nach einem der Ansprüche 12 bis 15, **dadurch gekennzeichnet, dass** eine Aufreißhilfe in Form einer Aufreißlasche (180) an der über die Längsnaht (140) hinausstehenden außenliegenden Folienkante (3) oder einem freiliegenden Folienkantenumschlag ausgebildet ist.

17. Verwendung einer Verbundfolie nach einem der Ansprüche 1 bis 11 zur Herstellung eines mit Siegelnähten gebildeten Schlauchbeutels.

## Claims

1. Sealable composite film for the production of film bags, which has a sealing layer (10) in each case on the outside on both sides,
**characterized in that**, on one side, directly under an outer, first sealing layer (10), the film has a pressure-sensitive adhesive layer (12) at least in the form of a strip along one edge of the film web and has a carrier layer (14) located underneath this in the layer sequence, and **in that** the composition of the layers is chosen in such a way that the tear resistance of two sealing layers (10) sealed to each other is greater than the bond between the pressure-sensitive adhesive layer (12) and the layers immediately adjacent thereto or within the pressure-sensitive adhesive layer itself.

2. Sealable composite film according to Claim 1, **characterized in that** the pressure-sensitive adhesive layer (12) within the composite film is formed over the entire area.

3. Sealable composite film according to Claim 1 or 2, **characterized in that** the sealing layers (10) consist of olefinic homopolymers or copolymers, preferably of LDPE, HDPE, LLDPE, m-PE, ethylene/vinyl acetate copolymer, polypropylene homopolymers or copolymers, polyester homopolymers or copolymers or mixtures with or of the aforementioned polymers.

4. Sealable composite film according to one of Claims 1 to 3, **characterized in that** the pressure-sensitive adhesive layer (12) consists of a pressure-sensitive permanent adhesive and preferably contains a hot-melt, in particular based on styrene-butadiene block copolymers or styrene/isoprene/butadiene block copolymers, or a warm-melt or a dispersion adhesive.

5. Sealable composite film according to one of Claims 1 to 4, **characterized in that** the sealing layer is modified with additives to the basic polymers and/or up to at most 8 µm thick intermediate layers, preferably with a co-extruded internal migration barrier layer.

6. Sealable composite film according to Claim 5, **characterized in that** the migration barrier layer is surrounded by polyolefins, preferably by polypropylene or polyethylene layers, in particular LDPE-HDPE, LLDPE or m-PE layers.

7. Sealable composite film according to one of Claims 1 to 6, **characterized in that** there is a migration barrier layer which contains at least 75% by weight of ethylene/vinyl alcohol copolymer, preferably underneath the pressure-sensitive adhesive layer (12), starting from the sealing layer (10) underlaid with pressure-sensitive adhesive.

8. Sealable composite film according to Claim 6 or 7, **characterized in that** the thickness of the migration barrier layer is between 0.5 and 7 µm.

9. Sealable composite film according to one of Claims 1 to 8, **characterized in that** the thickness of the pressure-sensitive adhesive layer (12) is 5 µm to 30 µm, preferably 10 µm to 20 µm, with a thickness of the sealing layers (10) of between 10 µm and 50 µm, preferably 20 µm to 30 µm.

10. Sealable composite film according to one of Claims 1 to 9, **characterized in that** the total thickness of the film is 20 to 200 µm, preferably 50 to 120 µm.

11. Sealable composite film according to one of Claims 1 to 10, **characterized in that** the carrier layer (14) consists of homopolymers or copolymers of polyester, preferably polyethylene terephthalate, polyolefin, in particular polyethylene, polypropylene or polyamide, further preferably monoaxially or biaxially oriented or multilayer composites thereof.

12. Tubular bag made of a composite film according to one of Claims 1 to 11, having two sealed transverse seams (120) and a sealed longitudinal seam (140), in which the longitudinal seam (140) is formed by overlapping the film web edges (1; 3) and the film underside/bag inner side is sealed along the outer film edge (3) to the film upper side/bag outer side of the film edge (1) located underneath, so that the pressure-sensitive adhesive layer (12) lies under the sealing layer (10) located on the bag outer side.

13. Tubular bag made of a composite film according to one of Claims 1 to 11, having two sealed transverse seams (120) and a sealed longitudinal seam (140), in which the longitudinal seam (140) is formed by means of a/a sealing of two film web edges (1; 3) turned over inwards or by means of a/a sealing of the outer film web edge (3) turned over inwards to the film upper side/bag outer side of the film edge (1) located underneath.

14. Tubular bag according to Claim 12 or 13, **characterized in that** at least one of the film edges (1; 3) or a turn-over edge formed thereby is placed on or close to lateral transverse seam ends.

15. Tubular bag according to one of Claims 12 to 14, **characterized in that** the longitudinal seam (140) is arranged parallel to a film edge (1; 3) or to a turn-over film edge at a distance therefrom which is less than the overlap width, so that a strip-like projection (160) forming a tear-open aid is formed on the other side of the longitudinal seam.

16. Tubular bag according to one of Claims 12 to 15, **characterized in that** a tear-open aid in the form of a tear-open tab (180) is formed on the outer film edge (3) projecting beyond the longitudinal seam (140) or on an exposed turn-over film edge.

17. Use of a composite film according to one of Claims 1 to 11 for the production of a tubular bag formed with sealed seams.

## Revendications

1. Feuille multicouche scellable pour la fabrication de sachets en feuille, qui présente de chaque côté une couche scellable (10) située à l'extérieur, **caractérisée en ce que** la feuille présente d'un côté directement sous une première couche scellable (10) située à l'extérieur, une couche auto-adhésive (12) au moins sous forme de stries le long d'un bord du ruban de la feuille ainsi qu'une couche de support (14) située sous la première couche dans l'ordre des couches et **en ce que** la composition des couches est choisie de telle sorte que la résistance au déchirage de deux couches scellables (10) scellées l'une à l'autre est supérieure à la liaison de la couche auto-adhésive (12) aux couches qui limitent directement cette dernière ou à l'intérieur de la couche auto-adhésive elle-même.

2. Feuille multicouche scellable selon la revendication 1, **caractérisée en ce que** la couche auto-adhésive (12) située à l'intérieur de la feuille multicouche est formée de façon complètement plane.

3. Feuille multicouche scellable selon l'une des revendications 1 ou 2, **caractérisée en ce que** les couches scellables (10) sont constituées par des homopolymères ou copolymères oléfiniques, de préférence par du LDPE, HDPE, LLDPE, m-PE, copolymère d'éthylène/acétate de vinyle, homopolymères de polypropylène ou copolymères de polypropylène, homopolymères ou copolymères de polyester ou des mélanges d'un ou plusieurs des polymères précités.

4. Feuille multicouche scellable selon l'une des revendications 1 à 3, **caractérisée en ce que** la couche auto-adhésive (12) est constituée par une matière adhésive permanente sensible à la pression et de préférence renferme un hotmelt en particulier à base de polymères blocs butadiène-styrène ou des copolymères blocs styrène-isoprène-butadiène ou un warmmelt ou une dispersion de matière adhésive.

5. Feuille multicouche scellable selon l'une des revendications 1 à 4, **caractérisée en ce que** la couche scellable est modifiée par des additifs aux polymères de base et/ou jusqu'à un maximum d'épaisseur de 8 µm de couches intercalaires, de préférence par une couche formant barrière de migration coextrudée située à l'intérieur.

6. Feuille multicouche scellable selon la revendication 5, **caractérisée en ce que** la couche formant barrière de migration est entourée par des couches de polyoléfines, de préférence par des couches de polypropylène ou de polyéthylène, en particulier des couches de LDPE-HDPE, LLDPE ou m-PE.

7. Feuille multicouche scellable selon l'une des revendications 1 à 6, **caractérisée en ce qu'**une couche formant barrière de migration est présente et elle renferme au moins 75% en poids de copolymérisat d'éthylène-alcool vinylique, de préférence par la couche scellable (10) revêtue en dessous de la matière auto-adhésive, suivant l'ordre des couches sous la couche auto-adhésive (12).

8. Feuille multicouche scellable selon la revendication 6 ou 7, **caractérisée en ce que** l'épaisseur de la couche formant barrière de migration est comprise entre 0,5 et 7 µm.

9. Feuille multicouche scellable selon la revendication 1 à 8, **caractérisée en ce que** l'épaisseur de la couche auto-adhésive (12) est de 5 µm à 30 µm, de préférence de 10 µm à 20 µm, l'épaisseur des couches scellables (10) étant comprise entre 10 µm et 50 µm de préférence entre 20 µm à 30 µm.

10. Feuille multicouche scellable selon l'une des revendications 1 à 9, **caractérisée en ce que** l'épaisseur totale de la feuille est de 20 à 200 µm de préférence entre 50 à 120 µm.

11. Feuille multicouche scellable selon l'une des revendications 1 à 10, **caractérisée en ce que** la couche de support (14) est constituée d'homo-ou copolymérisats de polyester, de préférence de téréphtalate de polyéthylène, polyoléfines en particulier de polyéthylène, polypropylène ou polyamide de façon plus préférée, orientés mono ou biaxialement ou liés ensemble en plusieurs couches.

12. Sachet tubulaire souple réalisé à partir d'une feuille multicouche selon l'une des revendications 1 à 11 comprenant deux joints transversaux scellés (120) et un joint longitudinal scellé (140), dans lequel le joint longitudinal (140) est réalisé par recouvrement des bords (1, 3) du ruban de la feuille et la face inférieure/face intérieure du sachet est scellée le long du bord (3) situé à l'extérieur de la feuille avec la face supérieure de la feuille/face extérieure du sachet du bord (1) de la feuille situé en dessous, de telle sorte que la couche auto-adhésive (12) se situe en dessous de la couche scellable (10) située à la face extérieure du sachet.

13. Sachet tubulaire souple réalisé à partir d'une feuille multicouche selon l'une des revendications 1 à 11 comprenant deux joints transversaux scellés (120) et un joint longitudinal scellé (140), dans lequel le joint longitudinal (140) est réalisé par scellement a/a de bords (1, 3) de la feuille repliées deux fois vers l'intérieur ou par scellement a/a du bord (3) situé à l'extérieur du ruban de feuille replié vers l'intérieur sur le bord (1) de la feuille situé en dessous de la face supérieure de la feuille/face extérieure du sachet.

14. Sachet tubulaire souple selon la revendication 12 ou 13, **caractérisé en ce qu'**au moins l'un des bords (1, 3) de la feuille ou le bord d'un repli formé avec ce bord est posé sur ou à proximité des extrémités latérales d'un joint transversal.

15. Sachet tubulaire souple selon l'une des revendications 12 à 14, **caractérisé en ce que** le joint longitudinal (140) est disposé parallèlement à un des bords (1, 3) de la feuille ou d'un repli de bord de la feuille et à une distance de celui-ci qui est plus petite que la largeur du recouvrement, de façon à réaliser de part et d'autre du joint longitudinal un dépassement (160) en forme de bande facilitant le déchirage.

16. Sachet tubulaire souple selon l'une des revendications 12 à 15, **caractérisé en ce qu'**une aide au déchirage sous forme d'une languette déchirable (180) est réalisée sur le bord (3) de la feuille situé à l'extérieur s'étendant au-dessus du joint longitudinal (140) ou sur un repli libre du bord de la feuille.

17. Utilisation d'une feuille multicouche selon l'une des revendications 1 à 11 pour la fabrication d'un sachet tubulaire souple a joints scellables.
